(19) Europäisches Patentamt / European Patent Office / Office européen des brevets

(11) **EP 4 190 518 A1**

(12) **EUROPEAN PATENT APPLICATION**
published in accordance with Art. 153(4) EPC

(43) Date of publication:
**07.06.2023 Bulletin 2023/23**

(21) Application number: **21850375.3**

(22) Date of filing: **21.07.2021**

(51) International Patent Classification (IPC):
**B25J 19/06** $^{(2006.01)}$

(52) Cooperative Patent Classification (CPC):
**B25J 19/06**

(86) International application number:
**PCT/JP2021/027426**

(87) International publication number:
**WO 2022/024946 (03.02.2022 Gazette 2022/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.07.2020 JP 2020127513**

(71) Applicant: **KAWASAKI JUKOGYO KABUSHIKI KAISHA**
**Kobe-shi, Hyogo 650-8670 (JP)**

(72) Inventors:
• **KAWAI, Makoto**
  **Kobe-shi Hyogo 6508670 (JP)**
• **NAGAHAMA, Yasuhide**
  **Kobe-shi Hyogo 6508670 (JP)**

(74) Representative: **Müller-Boré & Partner**
**Patentanwälte PartG mbB**
**Friedenheimer Brücke 21**
**80639 München (DE)**

(54) **STATE MONITORING DEVICE, STATE ABNORMALITY DETERMINATION METHOD, AND STATE ABNORMALITY DETERMINATION PROGRAM**

(57)  A state monitoring device monitors a state of a robot capable of playing back a predetermined operation. A time-series data acquirer acquires time-series data of state signals for a period of time from the timing of an acquisition start signal indicating a start of acquisition of a state signal reflecting a state of the robot to the timing of an acquisition end signal indicating an end of acquisition of the state signal. The time-series data is stored in association with timing information indicating the timing of acquisition and playback identification information identifying a playback operation of the robot. A dissimilarity calculator calculates dissimilarity between reference data based on the time-series data acquired in at least one operation and comparison data based on the time-series data acquired in an operation performed after the acquisition of the time-series data pertaining to the reference data. The robot state evaluator uses the dissimilarity as an evaluation quantity to evaluate the state of the robot.

FIG. 6

## Description

TECHNICAL FIELD

This invention mainly relates to a state monitoring device that monitors a state of a robot and assists in the maintenance of the robot.

BACKGROUND ART

When industrial robots are repeatedly operated in factories, it is inevitable that parts of the robot (e.g., mechanical parts) will deteriorate. As the situation progresses, the robot eventually breaks down. Since a long stoppage of the line due to robot failure results in significant losses, there is a strong demand for maintenance (preservation) to be performed before a robot failure occurs. On the other hand, frequent maintenance is also difficult from the standpoint of maintenance costs, etc.

In order to perform maintenance at the appropriate timing, a device has been proposed for predicting the residual life of a robot's reducer and other components. PTL 1 discloses a robot maintenance support device of this kind.

The robot maintenance support device of PTL 1 is configured to diagnose a future change trend of a current command value based on data of a current command value of a servo motor constituting a robot drive system, and to determine, based on the diagnosed change trend, a period of time until the current command value reaches a preset value.

PRIOR-ART DOCUMENTS

PATENT DOCUMENTS

PTL 1: Japanese Patent Application Laid-Open 2016-117148.

SUMMARY OF THE INVENTION

PROBLEMS TO BE SOLVED BY THE INVENTION

In the configuration of the above-mentioned PTL 1, I2 monitor, duty, and peak current are exemplified as diagnostic items for current command values. While these items may be effective in capturing predictive signs of robot failure, they may not be so effective in some cases. Therefore, there is a need for new indicators that can accurately detect when a robot is approaching failure.

The present invention is made in view of the above circumstances, and a main object is to capture the predictive signs of robot failure successfully.

MEANS FOR SOLVING THE PROBLEMS

The problem to be solved by this invention is as described above, and next, means for solving the problem and effects will be described.

In a first aspect of the present invention, a state monitoring device having the following configuration is provided. That is, the state monitoring device monitors a state of an industrial robot capable of playing back a predetermined operation. The state monitoring device includes a time-series data acquirer, a storage, a dissimilarity calculator, and a robot status evaluator. The time-series data acquirer acquires time-series data of state signals for a period of time from the timing of an acquisition start signal indicating a start of acquisition of a state signal reflecting a state of the robot to the timing of an acquisition end signal indicating an end of acquisition of the state signal. The storage stores time-series data acquired by the time-series data acquirer in association with timing information indicating when the time-series data was acquired and playback identification information identifying a playback operation of the robot when the time-series data was acquired. The dissimilarity calculator calculates dissimilarity between reference data based on the time-series data acquired in at least one playback operation and comparison data based on the time-series data acquired in the same playback operation performed after the acquisition of the time-series data pertaining to the reference data. The robot state evaluator uses the dissimilarity calculated by the dissimilarity calculator as an evaluation quantity for evaluating the state of the robot.

In a second aspect of the present invention, a state monitoring method having the following configuration is provided. That is, the state monitoring method monitors a state of an industrial robot capable of playing back a predetermined operation. The state monitoring method includes a time-series data acquisition process, a storage process, a dissimilarity calculation process, and a robot state evaluation process. In the time-series data acquisition process, time-series data of state signals are acquired for a period of time from the timing of an acquisition start signal indicating a start of acquisition of a state signal reflecting a state of the robot to the timing of an acquisition end signal indicating an end of acquisition of the state signal. In the storage process, the time-series data acquired in the time-series data acquisition process is stored in association with timing information indicating when the time-series data was acquired and playback identification information identifying a playback operation of the robot when the time-series data was acquired. In the dissimilarity calculation process, dissimilarity between reference data based on the time-series data acquired in at least one playback operation and comparison data based on the time-series data acquired in the same playback operation performed after the acquisition time of the time-series data pertaining to the reference data is calculated. In the robot state evaluation process, a state of the robot is evaluated using the dissimilarity calculated in the dissimilarity calculation process as an evaluation quantity.

In a third aspect of the present invention, a state monitoring program having the following configuration is provided. That is, the state monitoring program monitors a state of an industrial robot capable of playing back a predetermined operation. The state monitoring program causes a computer to execute a time-series data acquisition step, a storage step, a dissimilarity calculation step, and a robot state evaluation step. In the time-series data acquisition step, time-series data of state signals are acquired for a period of time from the timing of an acquisition start signal indicating a start of acquisition of a state signal reflecting a state of the robot to the timing of an acquisition end signal indicating an end of acquisition of the state signal. In the storage step, time-series data acquired in the time-series data acquisition step is stored in association with timing information indicating when the time-series data was acquired and playback identification information identifying a playback operation of the robot when the time-series data was acquired. In the dissimilarity calculation step, dissimilarity between reference data based on the time-series data acquired in at least one playback operation and comparison data based on the time-series data acquired in the same playback operation performed after the acquisition of the time-series data pertaining to the reference data. In the robot state evaluation step, a state of the robot is evaluated using the dissimilarity calculated in the dissimilarity calculation step as an evaluation quantity.

This makes it easy to recognize the predictive signs of robot failure. Thus, it is possible to perform maintenance on the robot before failure.

EFFECTS OF THE INVENTION

The present invention can provide a successful capture of the predictive signs of robot failure.

BRIEF DESCRIPTION OF THE DRAWINGS

FIG. 1 is a perspective diagram showing the configuration of a robot according to a first embodiment of the present invention.
FIG. 2 is a block diagram schematically showing the electrical configuration of the robot and state monitoring device.
FIG. 3 is a graph illustrating the timing of the trigger signal with respect to the acquisition of time-series data.
FIG. 4 is a conceptual diagram illustrating a DTW (Dynamic Time Warping) method.
FIG. 5(a) is a diagram showing a waveform related to current values without noise.
FIG. 5(b) is a diagram showing a waveform for current values with noise applied.
FIG. 6 is a graph showing transition of evaluation results by DTW distance for time-series data.
FIG. 7 is a graph showing transition of evaluation results by PTP for time-series data.
FIG. 8 is a graph showing transition of the evaluation results by root-mean-square of time-series data.
FIG. 9 is a graph showing a specific example of reference data and comparison data.
FIG. 10 is a graph showing an example of a graph displaying DTW distance.
FIG. 11 is a graph showing an example of a graph displaying transition of $a+k\sigma$ with respect to the DTW distance.
FIG. 12 shows an example of a graph displaying the transition of the abnormality degree of the Hotelling theory with respect to the DTW distance.
FIG. 13 is a flowchart illustrating the process of obtaining time-series data.
FIG. 14 is a flowchart illustrating the process of calculating the DTW distance.
FIG. 15 is a graph illustrating variations in the reference data and comparison data.
FIG. 16 is a graph illustrating transition of evaluation results by a second DTW distance for time-series data.
FIG. 17 is a graph illustrating transition of a third evaluation quantity for time-series data.
FIG. 18 is a graph showing transition of a fourth evaluation quantity for time-series data.
FIG. 19 is a graph showing an example of a warning message.
FIG. 20 is a conceptual diagram illustrating the dissimilarity calculated in a second embodiment.
FIG. 21 is a conceptual diagram illustrating the dissimilarity calculated in a third embodiment.

EMBODIMENT FOR CARRYING OUT THE INVENTION

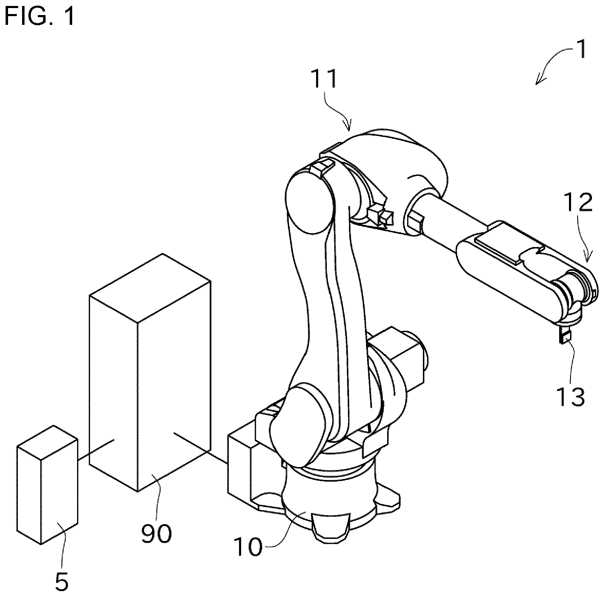

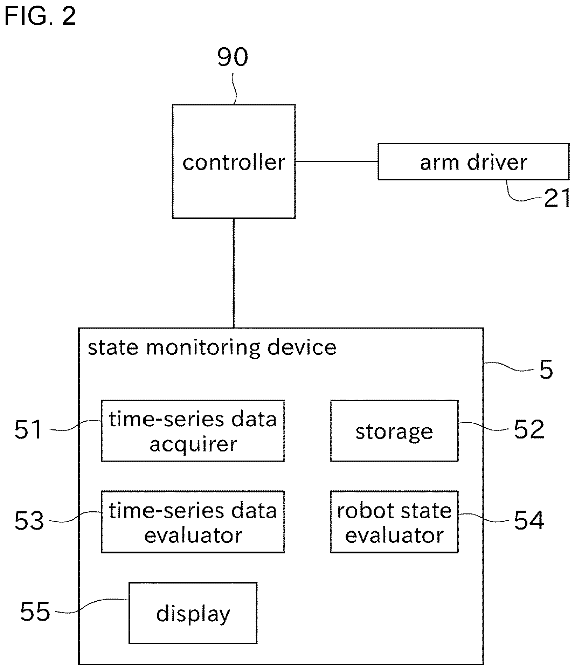

Next, the embodiments of the present invention will be described with reference to the drawings. FIG. 1 is a perspective diagram showing the configuration of a robot 1 in accordance with one embodiment of the present invention. FIG. 2 is a block diagram showing the electrical configuration of the robot 1 and the state monitoring device 5.

The state monitoring device 5 related to the present invention is applied, for example, to a robot (industrial robot) 1 as shown in FIG. 1. The robot 1 performs painting, cleaning, welding, transporting, and other operations on the workpiece to be worked on. The robot 1 is realized, for example, by a vertical articulated robot.

The configuration of the robot 1 is briefly described below with reference to FIG. 1 and FIG. 2, etc.

The robot 1 includes a pivot base 10, an articulated arm 11, and a wrist 12. The pivot base 10 is fixed to the ground (e.g., a factory floor). The articulated arm 11 includes multiple joints. The wrist 12 is attached to the end of the articulated arm 11. Attached to the wrist 12 is an end-effector 13 that performs work on the workpiece to be worked on.

As shown in FIG. 2, the robot 1 includes an arm driver 21.

These drivers comprise, for example, actuators configured as servo motors, and reducers. However, the configuration of the driver is not limited to the above. Each actuator is electrically connected to a controller 90. The actuator operates to reflect command values input from the controller 90.

The driving force from each of the servo motors comprising the arm driver 21 is transmitted via the reducers to each of the joints of the articulated arm 11, the pivot base 10, and the wrist 12. An encoder detecting its rotational position, not shown in the figure, is attached to each servo motor.

The robot 1 performs work by playing back operation recorded by teaching. The controller 90 controls the above actuators so that the robot 1 replays a series of operation previously taught by an instructor. Teaching to the robot 1 can be performed by the instructor operating a teaching pendant, which is not shown in the figure.

Teaching to the robot 1 generates a program for moving the robot 1. The program is generated each time teaching to the robot 1 is performed. If different operation is taught to the robot 1, the program will be different. By switching the program to be executed between multiple programs, the operation to be performed by the robot 1 can be changed.

The controller 90 is configured as a known computer including, for example, a CPU, ROM, RAM, and an auxiliary storage device. The auxiliary storage device is configured, for example, as a HDD, SSD, or the like. The auxiliary storage device stores programs and the like to operate the robot 1.

The state monitoring device 5 is connected to the controller 90, as shown in FIG. 1. The state monitoring device 5 obtains transition of the current value of the current flowing in the actuator (servo motor) and other transition via the controller 90.

If the servo motor and the reducer or the like connected to the servo motor were to have an abnormality, the current value of the servo motor would fluctuate under the influence of the abnormality. Therefore, this current value corresponds to a state signal that reflects the state of the robot 1. The transition of the current value can be expressed by repeatedly acquiring the current value concerned at short time intervals and arranging a large number of current values in a time-series. Hereafter, data in which the state signal values are arranged in a time-series may be referred to as time-series data.

By monitoring the acquired time-series data, the state monitoring device 5 can determine presence or absence of an abnormality of the robot 1. In the present embodiment, the state monitoring device 5 mainly targets the servo motors and the reducers of the respective joints to determine presence or absence of an abnormality.

Here, "abnormality" includes the case where some situation that does not lead up to operation failure/incapacity but is a predictive sign of such a situation occurs in the servo motor, the reducer or bearing.

As shown in FIG. 2, the state monitoring device 5 includes a time-series data acquisition unit (time-series data acquirer) 51, a storage 52, a time-series data evaluator (dissimilarity calculator) 53, a robot state evaluator 54, and a display 55.

The state monitoring device 5 is configured as a known computer equipped with a CPU, ROM, RAM, and an auxiliary storage device. The auxiliary storage device is configured as, for example, a HDD, SSD, or the like. The auxiliary storage device stores programs, etc. for evaluating the state of the robot 1. The cooperation of these hardware and software allows the computer to be operated as the time-series data acquisition unit 51, storage 52, time-series data evaluator 53, robot state evaluator 54, etc.

The time-series data acquisition unit 51 acquires the time-series data described above. The time-series data acquisition unit 51 acquires time-series data for all servo motors in the arm driver 21 of the robot 1. The time-series data is acquired individually for each of the plurality of servo motors (in other words, the plurality of reducers) located in each part of the robot 1.

In the present embodiment, the state signal is a current value. Here, the current value means the measured value of the magnitude of the current flowing in the servo motor measured by a sensor. The sensor is installed in a servo driver, which is not shown in the figure, that controls the servo motor. However, the sensor may be installed separately from the servo driver for monitoring purposes. Instead, a current command value that the servo driver gives to the servo motor may be employed as a state signal. The servo driver executes a feed-back control to control the servo motor to bring the current value closer to the current command value. Therefore, for the purpose of detecting a servo motor or reducer failure, there is little difference between the current value and the current command value.

The magnitude of the servo motor torque is proportional to the magnitude of the current. Therefore, a torque value or torque command value may be used as a state signal.

As a state signal, a deviation (rotational position deviation) between the target value for the rotational position of the servo motor and the actual rotational position obtained by the encoder may be used. Normally, the servo driver multiplies this deviation by a gain and gives it to the servo motor as a current command value. Therefore, the transition of the rotational position deviation shows a similar trend to that of the current command value. The actual rotational position of the servo motor may be used as a state signal.

The time-series data acquisition unit 51 acquires time-series data for each servo motor each time the robot 1 plays back the taught operation. However, instead of acquiring the time-series data for all playback operations, the time-series data may be acquired for only one or a few playback operations per day, for example.

The time-series data acquisition unit 51 acquires time-series data of the current values flowing to each servo motor between the timing when an acquisition start signal is received and the timing when an acquisition end signal is received. The acquisition start and end signals are output by the controller 90, for example.

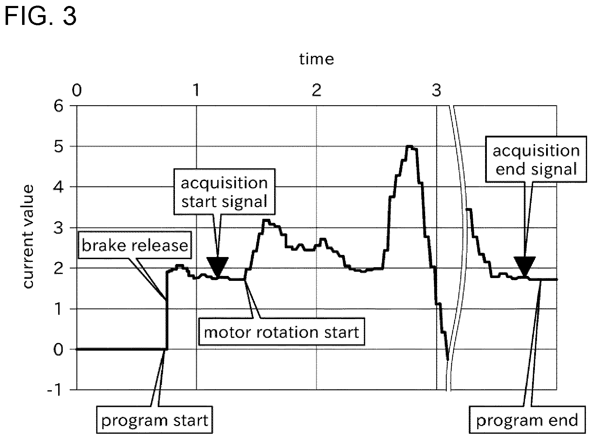

The graph in FIG. 3 shows an example of the current values flowing in the servo motor of a certain joint when the robot 1 performs a playback operation. As shown in FIG. 3, the current value of the servo motor is zero in the state before the playback operation program is executed. At this time, an electromagnetic brake, which is not shown in the figure, is operating at each joint, so the posture of the articulated arm 11, etc., is maintained.

The program of the playback operation of the robot 1 then begins. The brake is released accordingly, and at about the same time, current begins to flow to the servo motors. At this point, an output axis of the servo motor is controlled to stop. After a certain amount of time required for the angle of the output axis of the servo motor to stabilize, the servo motor begins to rotate. This starts an operation of the robot 1 substantially.

The controller 90 outputs an acquisition start signal to the state monitoring device 5 (and thus to the time-series data acquisition unit 51) after the brake is released and shortly before the servo motor starts to rotate.

When all the series of operations taught to the robot 1 are completed, the servo motor is controlled to stop rotating. The controller 90 outputs an acquisition end signal to the time-series data acquisition unit 51 at a point after the servo motor has stopped rotating and before the program ends.

The storage 52 comprises, for example, an auxiliary storage device as described above. The storage 52 stores the time-series data acquired by the time-series data acquisition unit 51.

In the present embodiment, the time-series data are a number of current values obtained by repeated detection at short fixed time intervals, arranged in time order. Therefore, current values in time-series data are sampled values. The time interval for detecting current values (sampling interval) is, for example, a few milliseconds. The sampling interval of the current values may coincide with a control cycle of the robot 1, or it may be different. The time-series data corresponds to the transition of the current values from the timing of the acquisition start signal to the timing of the acquisition end signal in the graph in FIG. 3.

The acquisition start signal or acquisition end signal may be substantially realized using other existing signals without special preparation for measurement such as acquisition of time-series data. For example, the fall of the "operating in playback" signal, which is mainly used for safety purposes, may be used as an acquisition end signal.

The storage 52 stores timing information indicating the timing of data acquisition in association with the time series data. The timing information can be, for example, a time stamp indicating the date and time of receipt of the acquisition start signal described above.

Similarly, the storage 52 stores the playback identification information indicating the operation that the robot 1 was performing at the time of acquisition of the time-series data in association with such time series data. A series of operations of the robot 1 is defined by a program of playback operation. Therefore, the playback identification information can be, for example, a program number or a program name assigned to uniquely identify the program of playback operations.

Storing of time-series data will now be described specifically. Using an OS file system provided by the state monitoring device 5, which is a computer, a folder is created in the auxiliary storage device mentioned above with a program number or program name as its name. In the folder, a file of time-series data obtained when the program with the number is executed is automatically saved. The file contains time-series data on the current values of the servo motors of the six joints, for example, in comma-separated value (CSV) format. The name of the file includes a timestamp string. The above is how the association of timing information and playback identification information to the time-series data is realized. However, the above is just an example, and the association may be realized in other ways.

The time-series data acquisition unit 51 acquires time-series data repeatedly over a long period of time in the process of the robot 1 operating in a factory or other location. Each time the time-series data is acquired once, one aforementioned file is saved.

The time-series data can be divided into two kinds of data: reference data, which is the data collected initially; and comparison data, which is the data collected later. The time-series data evaluator 53 compares the reference data with the comparison data to evaluate the comparison data. Based on the results of the evaluation, the time-series data evaluator 53 outputs an evaluation quantity for evaluating the state of the robot 1.

For example, as the reference data, the time-series data acquired by the time-series data acquisition unit 51 is used when the robot 1 is taught an operation and the operation is played back for the first time. However, it is also possible with the robot 1 to perform the playback operation for multiple times, including the first time, calculate the average time-series data by averaging the time-series data of the multiple times, and use the average time-series data as the reference data. The above multiple times may be consecutive times, such as the first, second, third, ..., or non-consecutive times, such as the first, fourth, sixth, ...

The timing for acquiring the reference data need not be strictly initial (first time); substantially initial (first time) is sufficient. For example, the reference data may be acquired after the robot 1 performs one or more playback operations as a break-in operation after operation teaching.

The reference data may be the time-series data of the first time or the filtered time-series data of the average of multiple times including the first time.

As the comparison data, time-series data obtained after the time-series data from which the reference data is obtained is used. The time-series data may be used directly as comparison data, or filtered time-series data may be used as comparison data.

In the following, the case where no filtering is performed against the reference data and the comparison data is called "raw" and the case where filtering is performed against the reference data and the comparison data is called "filtered".

Filter processing is performed, for example, to remove noise, etc., contained in time-series data. The filter processing for data is well known, thus a detailed description is omitted, but any filter, such as a moving average filter, CR circuit simulation filter, etc., can be used.

The reference data is prepared for each playback operation of the robot 1 (in other words, for each program). Although it is acceptable to acquire reference data for all taught operations, for example, if there is a main operation to be performed by the robot 1, or a simple operation that is not the main operation but is played back once a day, the reference data may be obtained only for this operation.

The time-series data evaluator 53 compares the reference data with the comparison data, using dynamic time warping (DTW) method. DTW is the abbreviation for Dynamic Time Warping.

Here is a brief explanation of the DTW method. The DTW method is used to calculate the degree of similarity between two time-series data. A key feature of the DTW method is that it allows for nonlinear expansion and contraction of the time-series data in the direction of the time axis when calculating the degree of similarity. This allows the DTW method to obtain results that are close to human intuition regarding the similarity of time-series data.

The time-series data evaluator 53 outputs DTW distance (dissimilarity), which indicates the magnitude of the difference between the comparison data and the reference data, as an evaluation quantity.

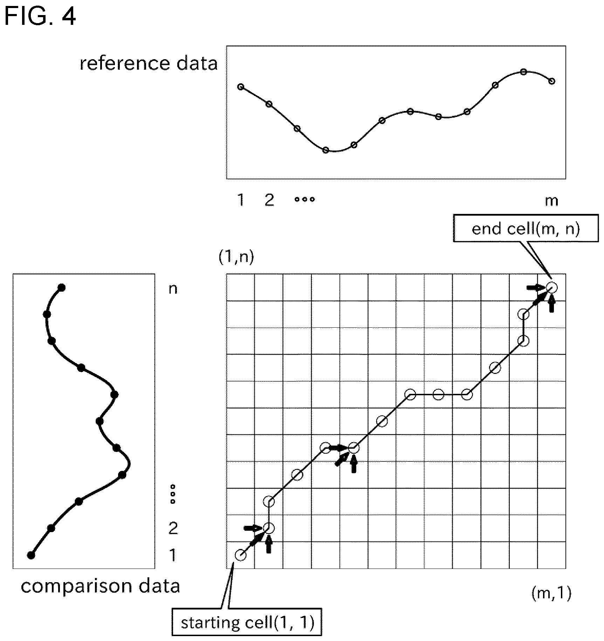

The principle of the DTW method is explained using FIG. 4. A plurality (m) of current values included in the reference data are arranged in chronological order along a first axis extending in the horizontal direction. The multiple (n) current values included in the comparison data are arranged along a second axis extending in the vertical direction.

Then, define m × n cells arranged in a matrix in the plane defined by the vertical and horizontal axes. Each cell (i, j) represents a mapping between the i-th current value in the reference data and the j-th current value in the comparison data. Note that the i satisfies $1 \leq i \leq m$ and the j satisfies $1 \leq j \leq n$.

Each cell (i, j) is associated with a numerical value representing the difference between the i-th current value in the reference data and the j-th current value in the comparison data. In the present embodiment, each cell is associated with an absolute value of the difference between the i-th current value and the j-th current value.

The time-series data evaluator 53 finds a warping path (path) from the starting cell located in the lower left corner of the matrix in FIG. 4 to the end cell located in the upper right corner.

The starting cell (1, 1) corresponds to mapping the current value at the earliest timing in the time-series (i.e., first) of the m current values in the reference data to the current value at the earliest timing in the time-series (i.e., first) of the n current values in the comparison data.

The end cell (m, n) corresponds to mapping the current value at the last timing in the time-series (i.e., m-th) of the m current values in the reference data to the current value at the last timing in the time-series (i.e., n-th) of the n current values in the comparison data.

In the m × n matrix constructed as described above, consider the path starting from the starting cell and reaching the end cell according to the following rules [1] and [2]. [1] May only move vertically, horizontally, or diagonally to adjacent cells. [2] Cannot move in the direction of backtracking the time of the reference data, nor can move in the direction of backtracking the time of the comparison data.

This sequence of cells is called a path, or warping path. The warping path shows how the m current values in the reference data correspond to the n current values in the comparison data, respectively. From another perspective, the warping path represents how the two time-series data are expanded or contracted in the time axis direction.

There are multiple possible warping paths from the starting cell to the end cell. Among the possible warping paths, the time-series data evaluator 53 finds the warping path that minimizes the sum of the values representing the differences associated with the passing cells (in the present embodiment, each cell is associated with the absolute value of the difference between the i-th current value and the j-th current value).

In the following, the warping path is sometimes referred to as the optimal warping path. The sum of the values of each square in the optimal warping path is called DTW distance. Instead of the DTW distance, the comparison data may be evaluated using the average of the DTW distance divided by the number of squares passed by the optimal warping path. The comparison data may also be evaluated using the value obtained by dividing the DTW distance by the number of elements m or n of any time-series data instead of the average value.

When m and n are large, a huge number of warping paths are possible. Therefore, if all possible warping paths are tentatively considered, the amount of calculation to find the optimal warping path will explosively increase. To solve this problem, the time-series data evaluator 53 in the present embodiment uses a DP matching method (dynamic programming) to calculate the DTW distance. DP is the abbreviation for Dynamic Programming.

The DP matching method is well known and will be briefly described below. Considering the above rules, as shown by the arrows in FIG. 4, if focusing on a certain cell, there are only three source cells that can be moved to the cell concerned. These three cells are the cell adjacent to the object cell on the left side, the cell adjacent to the object cell on the bottom side, and the cell adjacent to the object cell on the bottom left side. The time-series data evaluator 53 in the present embodiment uses the above features to calculate the DTW distance.

The following describes the specifics. The time-series data evaluator 53 first calculates the sum of the values of each cell in the path from the starting cell (1, 1) to the cell concerned for each of all cells (1, 1), (2, 1), ..., (m, 1) in the bottom row in the matrix in FIG. 4. In the following, this total value is sometimes referred to as the cell total. When one or more paths from the starting cell (1, 1) to a certain cell are considered, the minimum value of the cell total may be called the minimum cell total value.

Considering the above rule, there can be only one possible path from the starting cell (1, 1) to each cell in the bottom row of the matrix, which is linear. Therefore, the cell total for each cell is the minimum cell total value. With respect to the cells in the bottom row of the matrix, the calculation of the cell sum (the minimum cell total value) can be easily performed by adding the cell values in order from the starting cell (1, 1).

Next, focusing on the second row counting from the bottom edge.

First, consider cell (1, 2). The only possible cell immediately before the path reaches cell (1,2) is the starting cell (1,1). Thus, the sum of the values of each cell in the path from the starting cell (1,1) to cell (1,2) can be easily calculated. There should be only one possible path from the starting cell (1,1) to cell (1,2). Therefore, the sum obtained is the minimum cell total value for cell (1,2).

Next, consider cell (2, 2). There are three cells immediately before the path reaches cell (2,2): starting cell (1,1), cell (2,1), and cell (1,2). For the three cells, the minimum cell total value has been calculated so far. The time-series data evaluator 53 selects the cell with the smallest minimum cell total value among the three cells, adds the value of the cell (2, 2) to it, and determines the value obtained as the minimum cell total value for cell (2, 2). The time-series data evaluator 53 stores the location of the cell with the smallest minimum cell total value among the above three cells, associated with the location of cell (2, 2).

Next, consider cell (3, 2). There are three cells immediately before reaching cell (3,2): cell (2,1), cell (2,2), and cell (3,1). In the same way as in the case of cell (2,2), the time-series data evaluator 53 selects the cell with the smallest minimum cell total value among the three possible cells, adds the value of the cell (3,2) to it, and determines the value obtained as the minimum cell total value for cell (3,2). The time-series data evaluator 53 stores the location of the cell with the smallest minimum cell total value among the three cells mentioned above, associated with the location of cell (3, 2).

The time-series data evaluator 53 repeats the same process in turn, one by one, until the last cell (m, 2) in the second row counting from the bottom end.

The time-series data evaluator 53 repeats the above process for the third row counting from the bottom, the fourth row, ..., one row at a time in turn. When the calculation of all cells is completed, the minimum cell total value of the end cell (m, n) is obtained. This minimum cell total value means the total value of the path (optimal warping path) with the smallest sum of values of the cells passing among the paths from the starting cell (1, 1) to the end cell (m, n). The time-series data evaluator 53 outputs the minimum cell total value of the end cell (m, n) as the DTW distance.

If it is necessary to calculate a specific optimal warping path in addition to the DTW distance, it is sufficient to sequentially follow the location of the cells stored as the cell with the smallest minimum cell total value from the end cell (m, n) to the starting cell (1, 1). The above is an example of calculating row by row of the matrix, but it can also be calculated column by column.

The accuracy of the DP matching method is not perfect since it does not take into account all possible warping paths. However, the DP matching method can be used to find the optimal warping path with sufficient accuracy for practical use while significantly reducing the amount of calculation.

The DTW distance is the degree to which two time-series data (in other words, two signal waveforms) are dissimilar to each other. As is known, the DTW method can obtain the degree of dissimilarity (DTW distance) of two waveforms in a way that does not reflect differences in the time axis direction of the two waveforms, but reflects well differences in the amplitude and other aspects of the waveforms.

If the differences between the two waveforms are only different in period or phase from each other, the DTW distance is zero. This means that the two waveforms are evaluated as coincident.

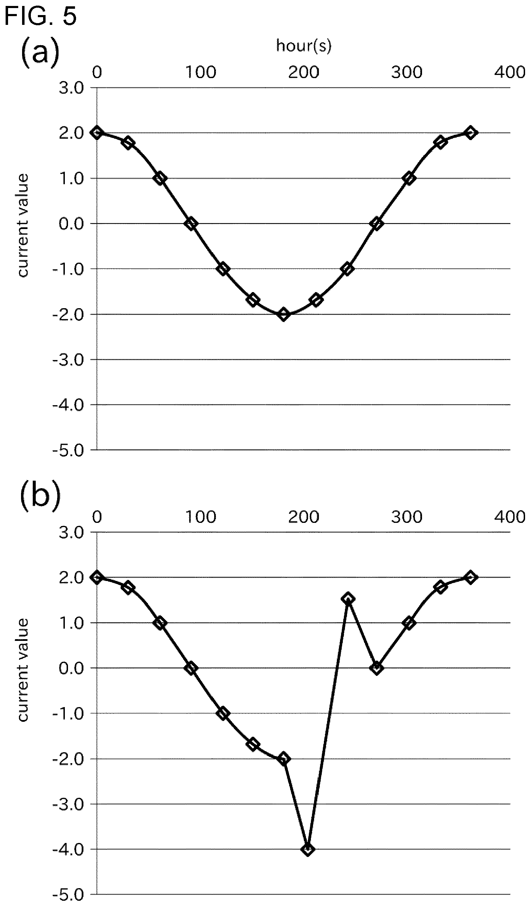

Next, consider two current waveforms shown in FIG. 5. FIG. 5(a) is the basic waveform, and FIG. 5(b) is the waveform with noise intentionally added to the basic waveform. The waveforms shown in FIG. 5 are created for illustrative purposes and are not actually obtained from the servo motor.

The basic waveform in FIG. 5(a) is represented by 2cos(cot) and has an amplitude of 2. The waveform in FIG. 5(b) corresponds to the basic waveform in FIG. 5(a) with -2.266 A of noise added to the -1.732 A point of current value and +2.5 A of noise added to the -1 A point of current value.

The DTW method distance between the two time-series data, using the plot points shown in each graph as time-series data, is 4.766. This is equal to the sum of the absolute values of the added noise, -2.266A and +2.5A. Thus, the DTW distance obtained by the DTW method directly reflects the noise. In addition, the DTW distance will reflect the noise in the positive direction and the noise in the negative direction without canceling each other out.

The time-series data evaluator 53 calculates the DTW distance described above between the reference data and the comparison data and outputs the resulting DTW distance.

The reference data and the comparison data include the time-series data of the servo motors of the six joints. The time-series data evaluator 53 calculates the DTW distance for each joint (in other words, for each servo motor).

Different operations to be performed by the robot 1 of course result in different transitions in the current values of the servo motors. Taking this into account, the calculation of the DTW distance by the time-series data evaluator 53 is performed for each playback operation. To be specific, the time-series data evaluator 53 calculates the DTW distance between the comparison data and the reference data for the same playback operation. This allows time-series data to be compared appropriately.

The DTW distance output by the time-series data evaluator 53 is stored in the storage 52. At this time, various information is stored in the storage 52 in association with the DTW distance. The information stored with the DTW distance includes timing information and playback identification information. The timing information is information indicating when the comparison data was acquired, for example, a time stamp. The playback identification information is, for example, a program number or program name for identifying the playback operation of the robot 1 at the time of acquisition of the comparison data.

Instead of a program number or program name, for example, a special signal included in the program may be used as the playback identification information. For example, if only one program contains a signal such as the acquisition start or/and acquisition end signal described above, the presence or absence of this signal can be used to identify it from other programs.

The robot state evaluator 54 evaluates the state of the robot 1 (each of its parts) using the DTW distances stored in the storage 52 (robot state evaluation process and robot state evaluation step).

The robot state evaluator 54 uses the DTW distance obtained for each servo motor to evaluate the state of that servo motor.

As time passes, it is assumed that the waveform corresponding to the time-series data of the actual current value will deviate from the waveform corresponding to the time-series data of the current value obtained for the first time. The DTW distance can be regarded as a numerical representation of the degree of this divergence. The robot state evaluator 54 uses the DTW distance to determine whether or not there is an abnormality in each of the servo motors of the six joints. It is also possible to predict when the servo motors will become inoperable/incapable in the future based on the transition of the DTW distance over time up to the present.

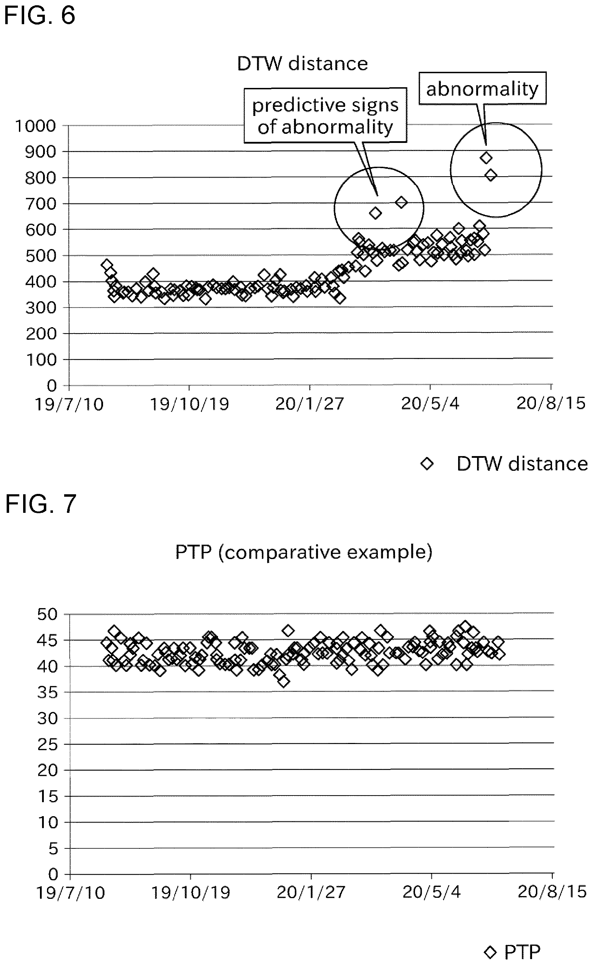

FIG. 6 shows an example of the transition of the DTW distance with respect to one of the servo motors provided by the robot 1. Every single point shows the calculated DTW distance.

In the example in FIG. 6, the robot 1 began operations around August 2019. During the first six months of operation, the DTW distance showed a slight increasing trend, but began to increase around February 2020. The servo motors became inoperable around June 2020.

On two occasions around March-April 2020, the DTW distance showed a peculiarly upward outlier. Considering that the servo motor became inoperable not too long afterwards, these two points could have been predictive sign of the servo motor becoming inoperable.

There are various possible phenomena that are predictive of a servo motor or other device becoming inoperable, such as noise contamination due to poor shielding of the control cable, mechanical vibration due to bearing deterioration, squeaking due to wear and tear on the gear tooth flanks of the reducer, and so on. The two points shown in FIG. 6 as "predictive signs of abnormality" are considered to be a result of the above phenomena affecting the time-series data of current values, which resulted in the peculiar change in the DTW distance.

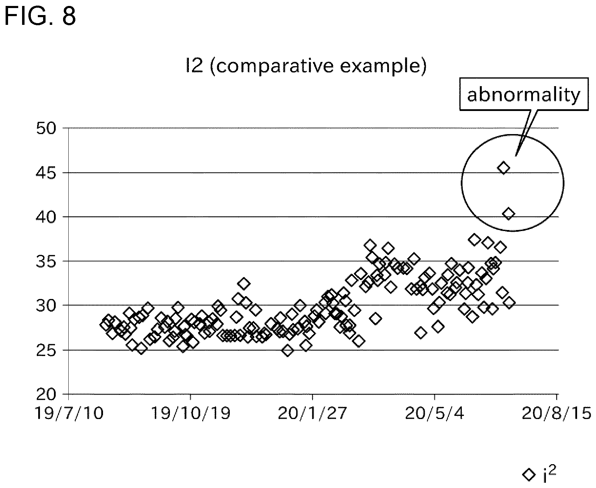

FIG. 7 and FIG. 8 show, as a comparative example, the transition of other indicators that represent changes in time-series data in the same case as in FIG. 6.

The Peak to Peak (PTP) shown in FIG. 7 is the value obtained by subtracting the current value of the lower peak from the current value of the higher peak of the current waveform. This PTP is a type of "peak current" as referred to in PTL 1. As shown in FIG. 7, the method using PTP makes it extremely difficult to capture the predictive signs of abnormality in the data around March-April 2020.

I2, shown in FIG. 8, is the root-mean-square value of the current. This I2 corresponds to the "I2" referred to in PTL 1. As shown in FIG. 8, even by the method using I2, it is extremely difficult to capture the predictive signs of abnormality in the data around March-April 2020.

PTP and I2 are values obtained by statistically processing time-series data. The reason why no predictive signs of abnormality are found in the graphs in FIG. 7 and FIG. 8 is considered to be that some features that indicate predictive signs of abnormality, which the time-series data contain, have been lost in the process of the above statistical processing. On the other hand, the DTW distance shown in FIG. 6 is value obtained by comparing time-series data without statistical processing. Therefore, the DTW distance can be regarded to be a value that is sensitive to changes in the time-series data depending on the features of the time-series data that indicate predictive signs of abnormality.

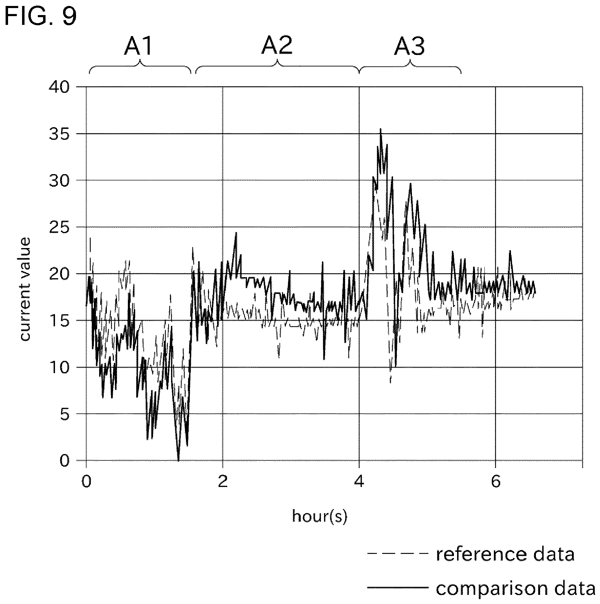

FIG. 9 shows reference and comparison data for a certain servo motor. The comparison data was obtained approximately 10 months after the reference data. Some divergence between the two time-series data has occurred over time, as can be seen in the figure.

In the current waveforms of FIG. 9, the range indicated by A1 corresponds to the motion of lowering the arm of the robot 1. In this range, the current value of the comparison data is generally lower than the reference data. This is due to mechanical losses caused by aging and other factors that work against the descent of the arm, which is thought to act as a kind of assist to the servo motor and reduce the current value flowing to the servo motor.

In the current waveforms of FIG. 9, the range indicated by A2 corresponds to the motion of holding the arm of the robot 1. The range indicated by A3 corresponds to the motion of raising the arm of the robot 1. In the range of A2 and A3, the current values of the comparison data are generally higher than the reference data. This is due to the mechanical losses caused by aging that work against the holding or raising of the arm, which is thought to increase the current value flowing to the servo motor.

Thus, mechanical loss as one of the phenomena that can be a predictive sign of failure can act in the direction of increasing or decreasing the current value of the time-series data, depending on the situation. For example, if above-mentioned I2 is used, the effects in both directions would be evaluated in a partially canceled manner. However, using the DTW distance in the present embodiment, the dissimilarity of the time-series data can be calculated with full consideration of the effects in both directions.

In the present embodiment, the time-series data that is the source of the reference and comparison data is limited to the period from the acquisition start signal to the acquisition end signal shown in FIG. 3. If, for example, a waveform at the timing corresponding to brake release in FIG. 3 were included in the time-series data, the dissimilarity would increase and there is a risk of erroneous determination that an abnormality exists. In this regard, setting the timing of the acquisition start signal and acquisition end signal appropriately in the present embodiment enables the evaluation by extracting only those periods of the current value transition that are substantially meaningful from the viewpoint of capturing the predictive signs of a failure.

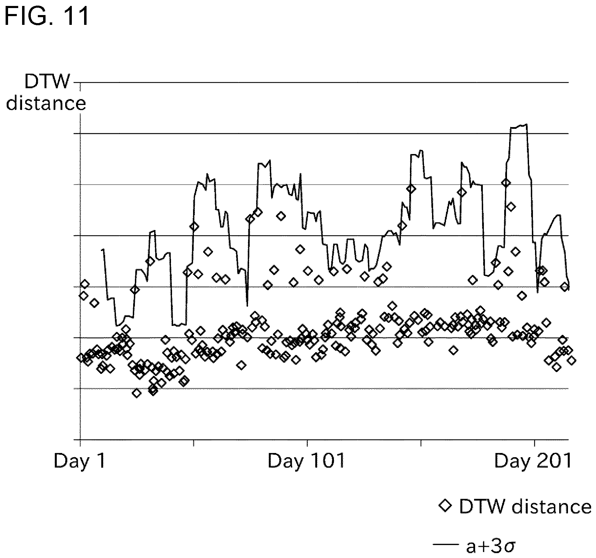

The robot state evaluator 54 can also determine the presence or absence of points such as those indicated as "predictive signs of abnormality" in FIG. 6 through appropriate calculations. This calculation methods can vary, but can be, for example, as follows. That is, focusing on a point, the average value a and standard deviation $\sigma$ of the DTW distance are calculated for the most recent N points up to that point. N is two or more. If the DTW distance at the point of interest is greater than $a+k\sigma$, the point is determined to be a predictive point of abnormality (in other words, an abnormality has occurred in the servo motor or the reducer). k is a positive value that can be set as needed. A threshold value may also be set and if it exceeds the threshold value, it may be evaluated as an "predictive sign of abnormality". Instead of the DTW distance, the Euclidean distance, etc., described below, may be used. The graph in FIG. 11 shows the transition of the value of $a+3\sigma$ with respect to the DTW distance. In the graph, the last 10 points are referenced and the average value a and standard deviation $\sigma$ are calculated.

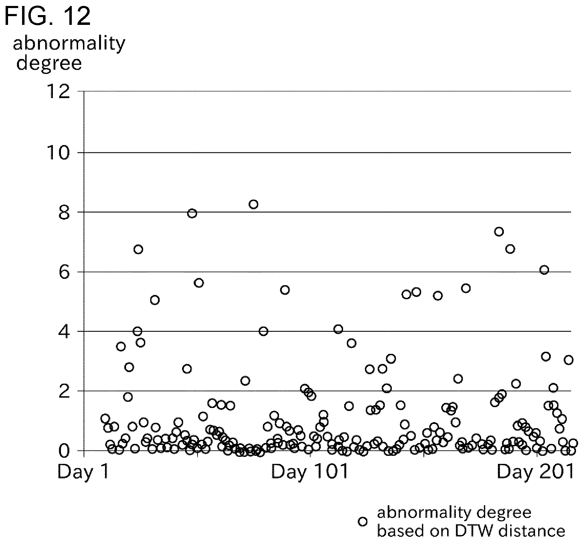

It can also be implemented as follows. That is, a point is focused on, and the average value a and standard deviation $\sigma$ of the DTW distance are calculated for the most recent N points up to that point. Then, using the DTW distance x of the point of interest, the value of $(x-a)2/\sigma2$, which is called the abnormality degree in Hotelling theory, is calculated and graphically shown. If necessary, this value can be multiplied by a coefficient. If this value exceeds a predetermined threshold, it may be evaluated as an "predictive sign of abnormality". Hotelling theory is one of the abnormality detection methods based on statistical models. It is known that if the value x follows a normal distribution, the above abnormality degree value follows a chi-square distribution with 1 degree of freedom. Using this property, Hotelling theory performs outlier detection by comparing the abnormality degree value with an appropriate threshold value. As x, the Euclidean distance, etc., described below, can be used instead of the DTW distance. The graph in FIG. 12 shows the transition of the value of $(x-a)2/\sigma2$ with respect to the DTW distance. Considering the graph in FIG. 12, an abnormality threshold value of about 10, for example, would be appropriate for detecting predictive signs of abnormality.

Whether calculating $a+k\sigma$ or $(x-a)2/\sigma2$, instead of targeting only the most recent N points, all points from the beginning of the evaluation can be targeted.

The DTW distance or Euclidean distance, etc., has the advantage of making it easier to capture features by calculating the distance between corresponding points of two waveforms. By calculating and obtaining standard deviations or abnormality degrees with respect to these distances, for example, a graph that is easy to understand can be provided to the failure monitoring operator.

The display 55 can display a graph corresponding to FIG. 6. The display 55 comprises a display device such as a liquid crystal display, for example. The operator monitors the graph to see if any peculiar points appear in the graph that deviate from the usual trend of DTW distances. The operator can use this information to properly plan for future maintenance.

If the robot state evaluator 54 determines that an abnormality has occurred in one or more servo motors, the display 55 displays information to inform it. For example, a warning message indicating that an abnormality has occurred may be displayed in the display 55. This allows the operator to grasp the situation at an early stage.

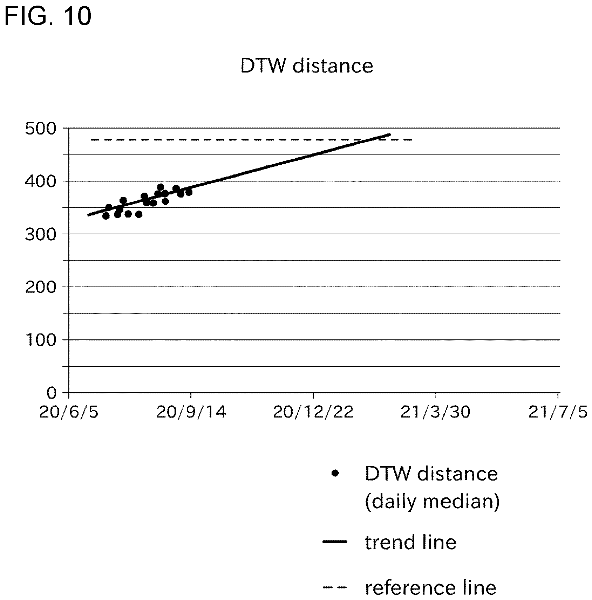

The robot state evaluator 54 can calculate a trend line that shows the trend of the DTW distance over time. An example of a trend line is shown in FIG. 10. The trend line can be obtained as a straight line that approximates a group of points plotted on a graph. The approximate straight line can be obtained by using the known least squares method, but the method is not limited.

The robot state evaluator 54 calculates the date and time when the trend line obtained as described above reaches the predetermined lifetime threshold. By calculating the period of time from the present time to that date and time, the robot state evaluator 54 can predict the residual life of the servo motor, etc.

The trend line is displayed on the display 55 in the form of an overlay on the graph in FIG. 10. Referring to the screen of the display 55 and checking the trend line, the operator can properly plan maintenance.

In calculating the trend line for the DTW distance, it is not necessary to approximate all DTW distances. For example, if the robot 1 repeats the same playback operation many times a day, the robot state evaluator 54 may determine a representative value of the DTW distance on a daily basis and determine a trend line to approximate the representative value.

The representative value can be, for example, the median value of the multiple DTW distances obtained for that day. When using the median value, it has the advantage of being less susceptible to the inclusion of extremely irregular DTW distances. Instead of the median, an average value may be used.

As a representative value, the maximum value among several DTW distances obtained on that day may be used. In this case, it is easier to reflect the predictive sign of abnormality in the trend line.

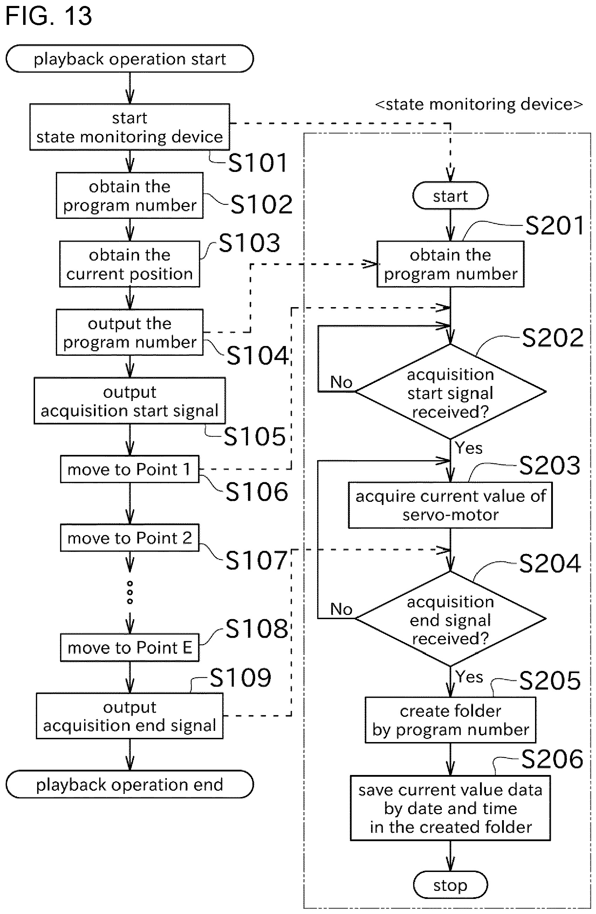

Next, an example of the process of acquiring time-series data by the time-series data acquisition unit 51 of the present embodiment will be described in detail with reference to the flowchart in FIG. 13.

As shown in FIG. 13, when the playback operation of the robot 1 starts, the controller 90 controlling the operation of the robot 1 activates the state monitoring device 5 (step S101).

The controller 90 then obtains the program number of the program for playback operation of the robot 1 (step S102). In the program for the playback operation, the path for moving the end-effector 13 is defined by describing a plurality of points (1), (2), ..., (E) through which the end-effector 13 passes.

The controller 90 further obtains the current rotational position of each servo motor (step S103).

The controller 90 outputs the program number obtained in step S102 above to the status monitoring device 5 (step S104).

The controller 90 then outputs the acquisition start signal to the state monitoring device 5 after the preparation for operation is complete (step S105). Preparation for operation includes releasing the brakes as described in FIG. 3.

The controller 90 operates each of the servo motors to move the end-effector 13 to the point (1) described above (step S106).

When the end-effector 13 reaches point (1), the controller 90 operates each of the servo motors to move the end-effector 13 to the next point (2) (step S107). The same operation is repeated, and eventually the end-effector 13 moves to the final point (E) (step S108).

After the end-effector 13 has reached the point (E), the controller 90 outputs an acquisition end signal to the state monitoring device 5 (step S109) and ends the program of playback operation.

Next, the process on the state monitoring device 5 side is described.

The controller 90 starts the state monitoring device 5 by performing the processing of step S101. After starting, the state monitoring device 5 obtains the program number output by the controller 90 of the robot 1 in step S104 (step S201).

The state monitoring device 5 then waits until it receives the acquisition start signal output by the controller 90 (step S202).

When the acquisition start signal is received, the state monitoring device 5 acquires each of the current values of the currents flowing in each of the servo motors driving the robot 1 (step S203). This step corresponds to the time-series data acquisition step (time-series data acquisition process).

The process of step S203 is repeated until the acquisition end signal output by the controller 90 is received by the state monitoring device 5 (step S204). Current values are obtained from the servo motors of each of the six joints, and these current values are stored in the RAM provided by the state monitoring device 5.

When the acquisition end signal is received, the state monitoring device 5 creates a folder in the auxiliary storage device with the program number obtained in step S201 as its name (step S205). If relevant folder has already been created, the processing of step S205 is skipped.

The state monitoring device 5 saves the current value data acquired between the timing when the acquisition start signal is received and the timing when the acquisition end signal is received as a file in the folder created in step S205 (step S206). The file describes a number of current value data in chronological order. The name of the file to be saved is defined to include a timestamp string representing the date and time when the acquisition start signal was received. Thereafter, the status monitoring device 5 essentially stops processing. Steps S205 and S206 above correspond to a storage step (storage process).

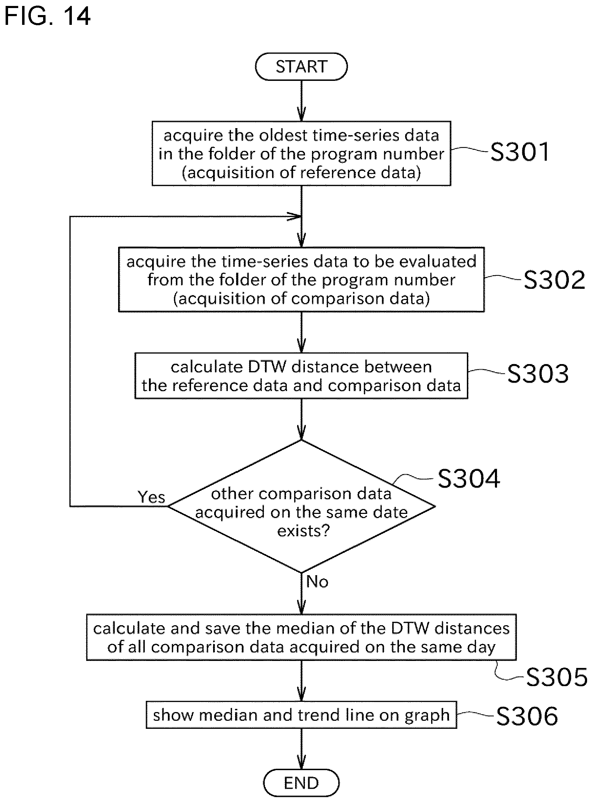

An example flowchart for determining the DTW distance between the reference data and the comparison data will now be described in detail with reference to FIG. 14. The calculation of the DTW distance shown in this flowchart corresponds to a dissimilarity calculation step (dissimilarity calculation process).

The process shown in FIG. 14 is performed once per day, e.g., after the factory's operating hours are over. When the process in FIG. 14 is started, the time-series data evaluator 53 acquires the oldest collected time-series data in the folder with the program number corresponding to a certain playback operation (step S301). The date and time collected can be easily obtained from the timestamps included in the names of the files. The time-series data acquired by step S301 corresponds to the reference data.

Next, the time-series data evaluator 53 acquires the time-series data collected as a result of today's playback operation of the robot 1, which is stored in the same folder (step S302). The time-series data acquired by step S302 corresponds to the comparison data.

The time-series data evaluator 53 calculates the DTW distance between the acquired reference data and comparison data (step S303).

The time-series data evaluator 53 then determines whether there are other comparison data collected today (step S304). If there is other comparison data on the same day, steps S302 and S303 are performed in the same manner for that comparison data.

Once the DTW distance is calculated for all comparison data collected today with the reference data, the process proceeds to step S305. In step S305, the time-series data evaluator 53 calculates the median of the DTW distances from the comparison data collected today and stores it in the storage 52.

Next, the robot state evaluator 54 creates a graph showing the daily transition of the median DTW distance obtained in step S305 (step S306). The graph is displayed on the display 55. An example of the graph is shown in FIG. 10. The graph displays a trend line calculated by the robot state evaluator 54 by calculating an approximate straight line of the median value, and a reference line indicating the lifespan threshold described above.

Next, variations of the DTW distance are described.

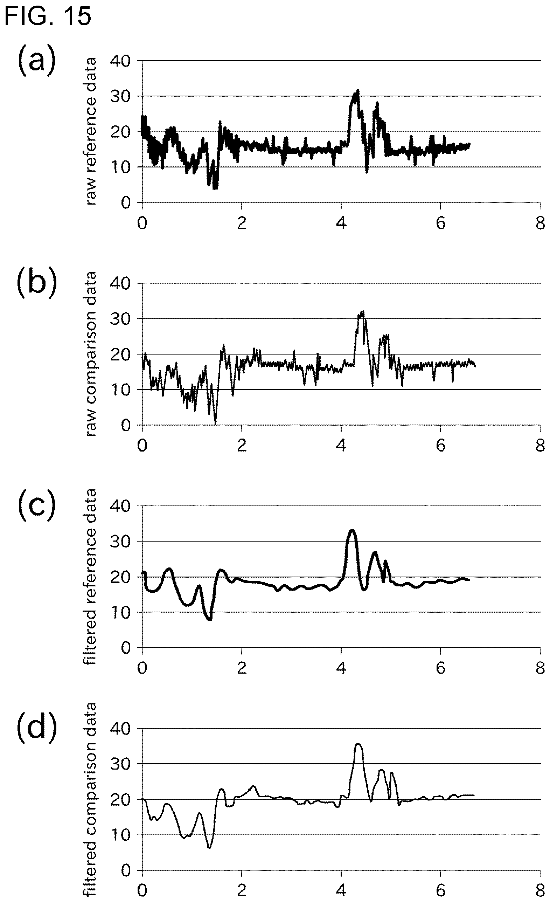

As described above, the DTW distance is calculated between the raw reference data and the raw comparison data. Examples of raw reference data and raw comparison data are shown in FIG. 15(a) and FIG. 15(b), respectively. Hereafter, the DTW distance in this case is sometimes referred to as a first DTW distance. The first DTW distance corresponds to a first dissimilarity and also corresponds to a first evaluation quantity.

However, as illustrated below, the DTW distance need not be calculated between the raw reference data and the raw comparison data.

The DTW distance may be calculated between the filtered reference data and the filtered comparison data. Examples of filtered reference data and filtered comparison data are shown in FIG. 15(c) and FIG. 15(d), respectively. In the examples in FIG. 15, a moving average filter is used. The DTW distance in this case is sometimes referred to as a second DTW distance. The second DTW distance corresponds to a second dissimilarity.

The DTW distance may be calculated between the filtered reference data shown in FIG. 15(c) and the raw comparison data shown in FIG. 15(b). The DTW distance in this case may be referred to as a third DTW distance. The third DTW distance corresponds to a 3rd dissimilarity.

The time-series data evaluator 53 may calculate the difference between the first DTW distance and the second DTW distance calculated as described above and output it as an evaluation quantity (second evaluation quantity). The difference between the third DTW distance and the second DTW distance may also be calculated and output as an evaluation quantity (third evaluation quantity).

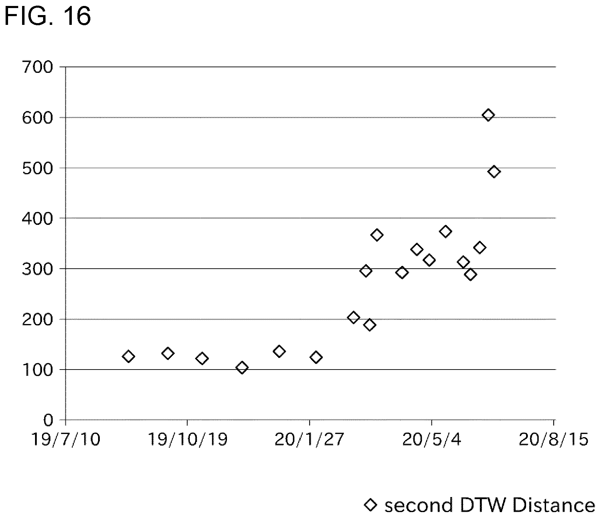

FIG. 16 shows the transition of evaluation results based on the second DTW distance. Since high-frequency components are removed by filter processing for the reference and comparison data, the second DTW distance can be regarded to reflect more strongly the changes in the reducer efficiency and mechanical loss over time. As shown in FIG. 16, the value of the second DTW does not change much until the midpoint, but shows a trend to increase at an accelerated rate in the latter part.

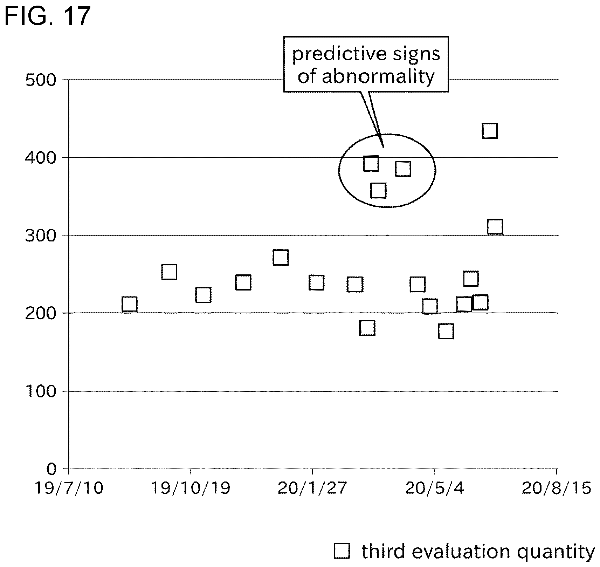

FIG. 17 shows the transition of the third evaluation quantity. This third evaluation quantity is the difference between the third DTW distance and the second DTW distance, as described above. The third DTW distance is the DTW distance between the filtered reference data and the raw comparison data. Therefore, this third evaluation quantity can be regarded to reflect more strongly the high-frequency components such as vibration and squeaking (e.g., the pulsed waveform) included in the comparison data.

In the graph in FIG. 17, it is easily seen that the third evaluation quantity value increases peculiarly around March-April 2020. These singular values can most likely be used as predictive signs of failure.

By using at least one of the reference or comparison data that has been filtered, it is possible that some feature that the comparison data contains, which represents a predictive sign of failure, can be emphasized relatively. In this sense, it is effective to use at least one of the second DTW distance, third DTW distance, second evaluation quantity, or third evaluation quantity.

The DTW distance may be calculated between the raw comparison data shown in FIG. 15(c) and the filtered comparison data shown in FIG. 15(d), instead of calculating between the reference data and the comparison data. In the following, this DTW distance is sometimes referred to as the fourth DTW distance. The fourth DTW distance corresponds to a fourth dissimilarity and also corresponds to a fourth evaluation quantity.

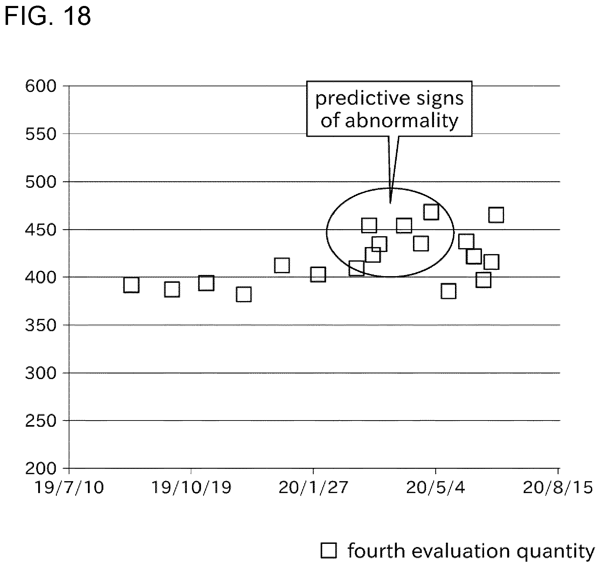

FIG. 18 shows the transition of the fourth evaluation quantity. Although it is somewhat unclear, it is easily seen that the fourth evaluation quantity value increases peculiarly around March-April 2020.

The fourth evaluation quantity may also be useful, depending on the situation, to capture predictive signs of failure, since it is a relative emphasis on noise components such as squeaks included in the comparison data.

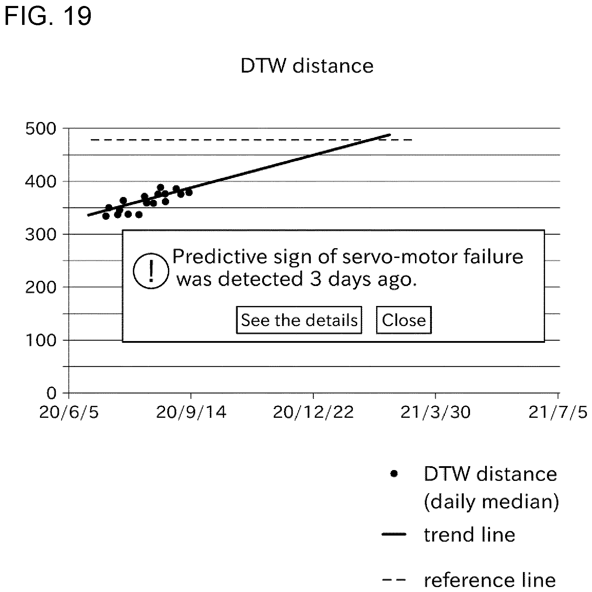

Each time the robot state evaluator 54 calculates the first DTW distance, a graph plotted for the first DTW distance is displayed on the display 55, e.g., FIG. 10. The graph also displays the trend line obtained by the robot state evaluator 54. At the same time, the robot state evaluator 54 monitors whether singular values appear for evaluation quantities other than the first DTW distance (e.g., the third evaluation quantity shown in FIG. 17). If a singular value appears, the robot state evaluator 54 displays a warning message (alarm) on the same screen as the graph to alert the operator, as shown in FIG. 19. This allows the operator to properly grasp the situation.

As explained above, the state monitoring device 5 monitors the state of an industrial robot capable of playing back predetermined operations. The state monitoring device 5 has the time-series data acquisition unit 51, the storage 52, the time-series data evaluator 53, and the robot state evaluator 54. The time-series data acquisition section 51 acquires time-series data of state signals for the period of time from the timing of the acquisition start signal indicating the start of acquisition of a state signal (specifically, the current value of the servo motor) reflecting the state of the robot 1 to the timing of the acquisition end signal indicating the end of acquisition of the state signal. The storage 52 stores the time-series data acquired by the time-series data acquisition unit 51 in association with timing information indicating when the time series data was acquired and a program number identifying the playback operation of the robot 1 when the time series data was acquired. The time-series data evaluator 53 calculates the DTW distance, which is the dissimilarity between the reference data and the comparison data. The reference data is based on the time-series data acquired in at least one playback operation. The comparison data is based on the time-series data acquired in the same playback operation performed after the time of acquisition of the time-series data for the reference data. The robot state evaluator 54 uses the DTW distance calculated by the time-series data evaluator 53 as an evaluation quantity (first evaluation quantity) for evaluating the state of the robot 1.

This makes it easier to identify predictive signs of the robot 1 failure and perform maintenance prior to the failure.

In the state monitoring device 5 of the present embodiment, the time-series data evaluator 53 performs the following processing. That is, consider the case where m current values taken from the reference data are arranged in chronological order on the horizontal axis, n current values taken from the comparison data are arranged in chronological order on the vertical axis, the correspondence of each current value is expressed in a matrix consisting of m × n cells, and the differences between the sampling values to be corresponded are associated with each cell. The starting cell is the cell corresponding to the mapping between the current value corresponding to the earliest timing in the time-series among the current values of the reference data arranged on the horizontal axis and the current value corresponding to the earliest timing in the time-series among the current values of the comparison data arranged on the vertical axis. The end cell is the cell corresponding to the mapping between the current value corresponding to the last timing in the time-series among the current values of the reference data arranged on the horizontal axis and the current value corresponding to the last timing in the time-series among the current values of the comparison data arranged on the vertical axis. Based on the above premise, the time-series data evaluator 53 finds the path from the start cell to the end cell that minimizes the sum of the differences corresponding to the cells to be passed through. The time-series data evaluator 53 determines the sum (DTW distance) or average of the differences corresponding to each cell that the path found passes through as the dissimilarity.

This allows the dissimilarity to be calculated while being sensitive to the signs of abnormality that the comparison data contains.

In the state monitoring device 5 of the present embodiment, the reference data can also be obtained by averaging time-series data acquired multiple times.

In this case, measurement errors can be suppressed.

In the state monitoring device 5of the present embodiment, the reference data can also be obtained by filtering the time-series data.

In this case, the dissimilarity can be calculated in the form of a relative emphasis on suitable components (e.g., high-frequency components) of the predictive signs of abnormality that the comparison data contains.

In the state monitoring device 5 of the present embodiment, the comparison data can also be obtained by filtering the time-series data.

In this case, the dissimilarity can be calculated in the form of a relative emphasis on an appropriate component (e.g., low-frequency component) of the predictive signs of abnormality that the comparison data contains.

In the state monitoring device 5 of the present embodiment, the time-series data evaluator 53 can also be configured to obtain the first DTW distance and the second DTW distance. The first DTW distance is the DTW distance between the reference data, which is unfiltered time-series data, and the comparison data, which is unfiltered time-series data. The second DTW distance is the DTW distance between the reference data that has been filtered against the time-series data and the comparison data that has been filtered against the time-series data. The time-series data evaluator 53 outputs the difference between the first DTW distance and the second DTW distance as the second evaluation quantity.

In the state monitoring device 5 of the present embodiment, the time-series data evaluator 53 can also be configured to obtain the third DTW distance and the second DTW distance. The third DTW distance is the DTW distance between the reference data that has been filtered against the time-series data and the comparison data that has not been filtered against the time-series data. The second DTW distance is the DTW distance between the reference data that has been filtered against the time-series data and the comparison data that has been filtered against the time-series data. The time-series data evaluator 53 outputs the difference between the third DTW distance and the second DTW distance as the third evaluation quantity.

In the state monitoring device 5 of the present embodiment, the time-series data evaluator 53 can also be configured to obtain the fourth DTW distance. The fourth DTW distance is the DTW distance between the data for comparison that has been filtered against the time-series data and the data for comparison that has not been filtered against the time-series data. The time-series data evaluator 53 outputs the fourth DTW distance as the fourth evaluation quantity.

With the above evaluation quantities, the signs of abnormality contained in the comparison data can be easily captured.

In the state monitoring device 5 of the present embodiment, the time-series data is data related to at least one of the current value, current command value, torque value, torque command value, rotational position deviation, or actual rotational position of the servo motor that drives the robot 1.

This allows for easy evaluation of the state of the servo motor and the surrounding configuration.

In the state monitoring device 5 of the present embodiment, the robot state evaluator 54 generates trend line data representing the trend of the DTW distance calculated by the time-series data evaluator 53 as it changes over time. The robot state evaluator 54 calculates the residual life based on the trend line.

This allows the operator to obtain information for properly planning the maintenance timing of the robot 1.

The state monitoring device 5 of the present embodiment also includes a display 55 capable of displaying the trend line. The display 55 is capable of displaying alarms at the same time as the trend line when a different evaluation quantity different from the DTW distance meets predetermined conditions, as shown in FIG. 19.

This allows the operator to quickly grasp situations that require attention.

Next, a second embodiment of the invention will be described. In the description of the present embodiment, the same or similar components as in the aforementioned embodiment are indicated with the same symbol in the drawings and may be omitted from the description.

Instead of the DTW distance, the time-series data evaluator 53 of the present embodiment calculates the Euclidean distance between the reference data and the data for comparison to obtain the dissimilarity of the two data.

The time-series data evaluator 53 moves one of the waveforms of the reference data and the waveform of the comparison data in multiple steps in the time axis direction, and for each step, the Euclidean distance is obtained by calculation.

Since the Euclidean distance is well known, it is briefly explained below. The Euclidean distance D between time-series data a and time-series data b is expressed by the following formula (1), where the length of the time-series data is m.

[Formula 1]

$$D(a,b) = \sum_{i=1}^{m} \sqrt{(a_i - b_i)^2}$$

$$= \sum_{i=1}^{m} |a_i - b_i| \qquad \dots (1)$$

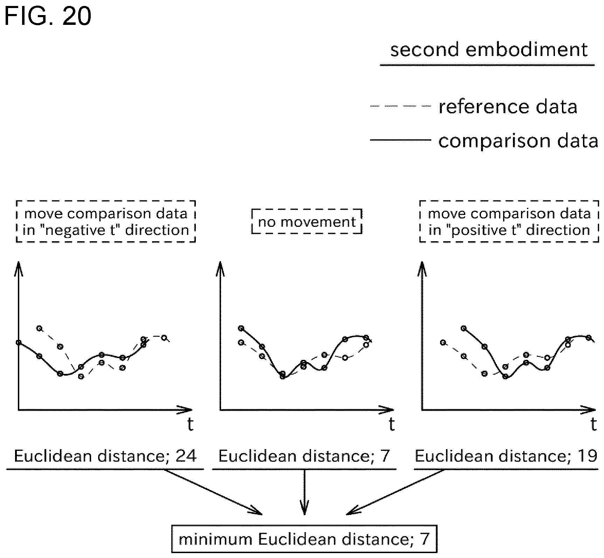

FIG. 20 shows an example of moving the comparison data by two steps: one step in the negative direction; and one step in the positive direction of the time axis. The Euclidean distance is calculated for three steps, including no movement. The amount of movement in the direction of the time axis per step and the number of steps of movement can all be defined optionally.

This shifting of the waveform can be substantially realized by uniformly shifting the correspondence between the m current values in the reference data and the m current values in the comparison data when calculating the Euclidean distance.

The time-series data evaluator 53 finds the minimum value of the plurality of Euclidean distances obtained above. The time-series data evaluator 53 outputs the minimum value as the dissimilarity between the reference data and the comparison data.

Here, the DTW distance used in the first embodiment evaluates the dissimilarity by substantially and strongly excluding the effects of, for example, a large time delay or a large distortion in the time axis direction between the two time-series data. However, there may be cases in which evaluating delays and distortions in the time axis direction of time-series data may be effective in capturing the predictive sign of abnormality. In this regard, when using the anomalous Euclidean distance in this form, the allowable time delay is limited to the maximum range in which the time-series data is shifted in steps in the direction of the time axis. Therefore, while allowing for a small time delay, the dissimilarity can be obtained by appropriately reflecting some large delay and distortion of the time-series data in the direction of the time axis. In other words, while phase deviations as measurement errors are ignored, large phase deviations that indicate degradation of servo motors, etc., can be detected appropriately.

As shown in FIG. 20, the relative shifting of time-series data in the direction of the time axis results in combinations that have no mating elements. When there are many elements (current values) without a counterpart, the Euclidean distance decreases as the number of elements with a counterpart decreases. To solve this problem, the Euclidean distance obtained as described above could be divided by the number of elements with a counterpart, and the average value obtained could be used for evaluation as the dissimilarity. Alternatively, it is possible to correct for the elements with no counterpart at both ends of the time-series data by adding as their counterpart an element with a value equal to the value of the starting or ending point obtained in the measurement.

As explained above, the state monitoring device 5 in the present embodiment calculates the Euclidean distance between two waveforms, respectively, while moving at least one of the waveforms of the reference data or the waveform of the comparison data in multiple steps in the time axis direction. The minimum value of the Euclidean distance is the dissimilarity.

This allows the dissimilarity to accurately reflect distortions, etc. in the time axis direction in the time-series data.

Next, the third embodiment of the invention will be described. In the description of the present embodiment, the same or similar components as in the aforementioned embodiment are indicated with the same symbol in the drawings and may be omitted from the description.

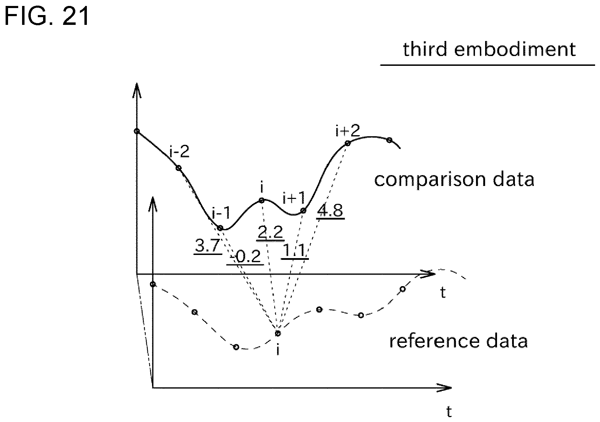

The time-series data evaluator 53 of the present embodiment obtains the difference between the i-th current value among the m current values included in the reference data and the current values from the (i-p)-th to the (i+p)-th of the m current values included in the comparison data, respectively. FIG. 21 is a schematic diagram showing the case where p = 2, and the difference in current values is represented by the underlined numbers.

The time-series data evaluator 53 then examines which of the current values from the (i-p)-th to the (i+p)-th of the comparison data is closest to the i-th current value of the reference data. In the example shown in FIG. 21, the (i-1)-th current value has the smallest absolute difference from the i-th current value of the reference data among the (i-2)-th to (i+2)-th current values of the comparison data, and the difference is -0.2. The i-th current value of the reference data corresponds to the first sampling value, and the (i-1)-th current value of the comparison data corresponds to the second sampling value.

The time-series data evaluator 53 calculates the Euclidean distance as the dissimilarity. In this case, the difference between the i-th current value of the reference data and the current value closest to the i-th current value of the reference data among the (i-2)-th to (i+2)-th current values of the comparison data is regarded as the absolute value of the difference between the i-th current value of the reference data and the i-th current value of the comparison data ($|a_i - b_i|$ in formula (1) above).

The dissimilarity obtained in this way appropriately reflects the somewhat large time-directional delay and distortion of the time-series data, while allowing for a small time delay and distortion. In other words, the phase shift as a measurement error is corrected, and large phase shifts indicating degradation are detected.

As explained above, the state monitoring device 5 calculates the Euclidean distance between the waveforms of the reference data and the waveforms of the comparison data, for which a plurality of sampling values are obtained respectively, considering the difference between the first current value , which is the i-th current value of one waveform, and the second current value, which is the closest to the first current value among the current values from the (i-p)-th to (i+p)-th current values (where i and p are integers of 1 or more) of the other waveform, to be the difference between of corresponding sampling values in the two waveforms. The state monitoring device 5 uses this Euclidean distance as the dissimilarity.

This enables the dissimilarity to accurately reflect distortions, etc. in the time axis direction in the time-series data.

While suitable embodiments of the invention have been described above, the above configuration can be modified, for example, as follows.

The state monitoring device 5 does not have to be directly connected to the robot 1, but may obtain time-series data reflecting the state of the robot 1 from the controller 90 of the robot 1 via a communication line, such as the Internet, for example. In this case, the controller 90 acquires and stores the current values in real time in the playback operation, and transmits the time-series data of the current values together with the program number, date and time of acquisition of the current values, and information identifying the servo motor to the state monitoring device 5 by batch processing or the like.

The DTW distance may be obtained without using the DP matching method.

The state monitoring device 5 may be included in the controller 90, instead of being provided separately from the controller 90. The state monitoring device 5 may also be realized using the computer of the controller 90 of the robot 1, without a computer functioning as CPU, ROM, RAM, auxiliary storage device, etc. of the state monitoring device 5. In this case, the display 55 can be configured as part of the teaching pendant of the robot 1, for example, to display the aforementioned warning message in a switchable manner.

DESCRIPTION OF THE REFERENCE NUMERALS

1 robot
5 state monitoring device
51 time-series data acquisition unit (time-series data acquirer)
52 storage
53 time-series data evaluator (dissimilarity calculator)
54 robot state evaluator

**Claims**

1. A state monitoring device that monitors a state of an industrial robot capable of playing back a predetermined operation comprising:

    a time-series data acquirer that acquires time-series data of state signals for a period of time from the timing of an acquisition start signal indicating a start of acquisition of a state signal reflecting a state of the robot to the timing of an acquisition end signal indicating an end of acquisition of the state signal;
    a storage that stores time-series data acquired by the time-series data acquirer in association with timing information indicating when the time-series data was acquired and playback identification information identifying a playback operation of the robot when the time-series data was acquired;
    a dissimilarity calculator that calculates dissimilarity between reference data based on the time-series data acquired in at least one playback operation and comparison data based on the time-series data acquired in the same playback operation performed after the acquisition of the time-series data pertaining to the reference data; and
    a robot state evaluator that uses the dissimilarity calculated by the dissimilarity calculator as an evaluation quantity for evaluating the state of the robot.

2. A state monitoring device according to claim 1, wherein

    the dissimilarity calculator finds,
    when m sampling values taken from the reference data are arranged in chronological order on a first axis, and n sampling values taken from the comparison data are arranged in chronological order on a second axis, and the correspondence of each sampling value is expressed by a matrix consisting of m × n cells, and differences between the sampling values to be corresponded are associated with each cell,
    among paths from the starting cell corresponding to the mapping between the sampling value corresponding to the earliest timing in the time-series among the sampling values of the reference data arranged on the first axis and the sampling value corresponding to the earliest timing in the time-series among the sampling values of the comparison data arranged on the second axis
    to the end cell corresponding to the mapping between the sampling value corresponding to the last timing in the time-series of the sampling values of the reference data arranged on the first axis and the sampling value corresponding to the last timing in the time-series of the sampling values of the comparison data arranged on the second axis,
    a path that minimizes a sum of the differences associated with the cells to be passed through, and
    the sum or an average of the differences associated with each of the cells through which the calculated path passes is the dissimilarity.

3. The state monitoring device according to claim 1, wherein

    the dissimilarity calculator calculates
    a Euclidean distance between two waveforms while moving at least one of the waveform of the reference data or the waveform of the comparison data in multiple steps in the direction of a time axis, respectively, and
    the minimum value of the Euclidean distance is the dissimilarity.

4. The state monitoring device according to claim 1, wherein

    the dissimilarity calculator calculates,
    between a waveform of the reference data and a waveform of the comparison data, in each of which a plurality of sampling values are acquired respectively,
    a Euclidean distance, considering a difference between a first sampling value which is the $i$-th sampling value of one waveform and a second sampling value which is the closest to the first sampling value among the sampling values from the $(i-p)$-th to $(i+p)$-th (where $i$ and $p$ are integers greater than or equal to 1) of the other waveform as a difference between the corresponding sampling values of the two waveforms, and
the Euclidean distance is the dissimilarity.

5. The state monitoring device according to any one of claims 1 to 4, wherein
the reference data is obtained by averaging the time-series data acquired multiple times.

6. The state monitoring device according to any one of claims 1 to 5, wherein
the reference data is obtained by filtering the time-series data.

7. The state monitoring device according to any one of claims 1 to 6, wherein
the comparison data is obtained by filtering the time-series data.

8. The state monitoring device according to any one of claims 1 to 5, wherein
the dissimilarity calculator calculates:

   a first dissimilarity, which is a dissimilarity between the reference data that is not filtered against the time-series data and the comparison data that is not filtered against the time-series data; and
   a second dissimilarity, which is a dissimilarity between the reference data filtered against the time-series data and the comparison data filtered against the time-series data, and
   the difference between the first dissimilarity and the second dissimilarity is output as a second evaluation quantity.

9. The state monitoring device according to any one of claims 1 to 5, wherein
the dissimilarity calculator calculates:

   a third dissimilarity, which is a dissimilarity between the reference data filtered against the time-series data and the comparison data that is not filtered against the time-series data; and
   a second dissimilarity, which is a dissimilarity between the reference data filtered against the time-series data and the comparison data filtered against the time-series data, and
   the difference between the third dissimilarity and the second dissimilarity is output as a third evaluation quantity.

10. The state monitoring device according to any one of claims 1 to 5, wherein

   the dissimilarity calculator calculates
   a fourth dissimilarity, which is a dissimilarity between the comparison data filtered against the time-series data and the comparison data that is not filtered against the time-series data, and
the fourth dissimilarity is output as a fourth evaluation quantity.

11. The state monitoring device according to any one of claims 1 to 10, wherein
the time-series data is data related to at least one of a current value, current command value, torque value, torque command value, rotational position deviation, or actual rotational position of a motor that drives the robot.

12. The state monitoring device according to any one of claims 1 to 11, wherein

   the robot state evaluator generates trend line data representing a trend in which the dissimilarity calculated by the dissimilarity calculator changes over time, and
   the robot state evaluator calculates a residual life based on the trend line.

13. The state monitoring device according to claim 12 comprising

   a display capable of displaying the trend line, wherein
   the display is capable of displaying, simultaneously with the trend line, an alarm when an evaluation quantity different from the dissimilarity meets a predetermined condition.

14. A state monitoring method that monitors a state of an industrial robot capable of playing back a predetermined operation, the state monitoring method comprising:

   a time-series data acquisition process of acquiring time-series data of state signals for a period of time from the timing of an acquisition start signal indicating a start of acquisition of a state signal reflecting a state of the robot to the timing of an acquisition end signal indicating an end of acquisition of the state signal;
   a storage process of storing time-series data acquired in the time-series data acquisition process in association with timing information indicating when the time-series data was acquired and playback identification information identifying a playback operation of the robot when the time-series data was acquired;
   a dissimilarity calculation process of calculating dissimilarity between reference data based on the time-series data acquired in at least one playback operation and comparison data based on the time-series data acquired in the same playback operation performed after the acquisition time of the time-series data pertaining to the reference data; and

a robot state evaluation process of evaluating a state of the robot by using the dissimilarity calculated in the dissimilarity calculation process as an evaluation quantity.

15. A state monitoring program configured to monitor a state of an industrial robot capable of playing back a predetermined operation, the program causing a computer to execute the following steps:

a time-series data acquisition step of acquiring time-series data of state signals for a period of time from the timing of an acquisition start signal indicating a start of acquisition of a state signal reflecting a state of the robot to the timing of an acquisition end signal indicating an end of acquisition of the state signal;

a storage step of storing time-series data acquired in the time-series data acquisition step in association with timing information indicating when the time-series data was acquired and playback identification information identifying a playback operation of the robot when the time-series data was acquired;

a dissimilarity calculation step of calculating dissimilarity between reference data based on the time-series data acquired in at least one playback operation and comparison data based on the time-series data acquired in the same playback operation performed after the acquisition of the time-series data pertaining to the reference data ; and

a robot state evaluation step of evaluating a state of the robot using the dissimilarity calculated in the dissimilarity calculation step as an evaluation quantity.

FIG. 1

FIG. 2

FIG. 3

# FIG. 4

reference data

1　2　ㅇㅇㅇ　　　　　　　　　　　m

end cell(m, n)

(1,n)

n

ㅇ
ㅇ

2

1

comparison data

starting cell(1, 1)

(m,1)

FIG. 5

(a)

(b)

## FIG. 6

DTW distance

predictive signs
of abnormality

abnormality

◇ DTW distance

## FIG. 7

PTP (comparative example)

◇ PTP

FIG. 8

I2 (comparative example)

FIG. 9

FIG. 10

DTW distance

● DTW distance
  (daily median)

— trend line

-- reference line

FIG. 11

DTW
distance

Day 1                    Day 101                    Day 201

◇ DTW distance

—— a+3σ

# FIG. 12

# FIG. 13

# FIG. 14

START

acquire the oldest time-series data
in the folder of the program number
(acquisition of reference data) — S301

acquire the time-series data to be evaluated
from the folder of the program number
(acquisition of comparison data) — S302

calculate DTW distance between
the reference data and comparison data — S303

S304

Yes — other comparison data
acquired on the same date
exists?

No

calculate and save the median of the DTW distances
of all comparison data acquired on the same day

— S305

show median and trend line on graph — S306

END

FIG. 15

(a) raw reference data

(b) raw comparison data

(c) filtered reference data

(d) filtered comparison data

FIG. 16

◇ second DTW Distance

FIG. 17

predictive signs
of abnormality

500

400

300

200

100

0

19/7/10          19/10/19          20/1/27          20/5/4          20/8/15

☐ third evaluation quantity

FIG. 18

predictive signs
of abnormality

☐ fourth evaluation quantity

FIG. 19

DTW distance

Predictive sign of servo-motor failure was detected 3 days ago.

See the details    Close

20/6/5        20/9/14        20/12/22        21/3/30        21/7/5

● DTW distance
(daily median)

— trend line

– – reference line

# FIG. 20

second embodiment

—————— reference data

——————— comparison data

| move comparison data in "negative t" direction | no movement | move comparison data in "positive t" direction |

Euclidean distance; 24    Euclidean distance; 7    Euclidean distance; 19

minimum Euclidean distance; 7

# FIG. 21

third embodiment

comparison data

reference data

## INTERNATIONAL SEARCH REPORT

| International application No. |
| --- |
| **PCT/JP2021/027426** |

**A.    CLASSIFICATION OF SUBJECT MATTER**

***B25J 19/06***(2006.01)i
FI:    B25J19/06

According to International Patent Classification (IPC) or to both national classification and IPC

**B.    FIELDS SEARCHED**

Minimum documentation searched (classification system followed by classification symbols)

B25J19/06

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 2020-102001 A (FANUC LTD.) 02 July 2020 (2020-07-02) paragraphs [0021]-[0048], fig. 1-5B | 1-2, 6-7, 11, 14-15 |
| A | | 3-5, 8-10, 12-13 |
| Y | JP 2011-59790 A (HITACHI, LTD.) 24 March 2011 (2011-03-24) paragraphs [0016]-[0082], fig. 1-22 | 1-2, 6-7, 11, 14-15 |
| Y | WO 2013/051101 A1 (HITACHI, LTD.) 11 April 2013 (2013-04-11) paragraph [0050], fig. 10 | 2, 6-7, 11 |

☐ Further documents are listed in the continuation of Box C.         ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **24 September 2021** | **05 October 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2021/027426**

| Patent document cited in search report | | | Publication date (day/month/year) | Patent family member(s) | | | Publication date (day/month/year) |
|---|---|---|---|---|---|---|---|
| JP | 2020-102001 | A | 02 July 2020 | US paragraphs [0033]-[0059], fig. 1-5B | 2020/0198128 | A1 | |
| | | | | DE | 102019219332 | A1 | |
| | | | | CN | 111352388 | A | |
| JP | 2011-59790 | A | 24 March 2011 | US paragraphs [0039]-[0119], fig. 1-22 | 2012/0166142 | A1 | |
| | | | | EP | 2477086 | A1 | |
| WO | 2013/051101 | A1 | 11 April 2013 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016117148 A